# EUROPEAN PATENT APPLICATION

(11) **EP 0 602 793 A1**
(43) Date of publication of application: **22.06.1994**
(21) Application number: 93308882.5
(22) Date of filing: 08.11.1993
(51) Int. Cl.: B23D 47/08

(54) **Method and apparatus for machining and cutting a workpiece**

(30) Priority: 04.12.1992 JP 325795/92
(71) Applicant: Sasaki, Hiroshi, Hakodate-shi, Hokkaido (JP)
(72) Inventor: Sasaki, Hiroshi, Hakodate-shi, Hokkaido (JP); Nakata, Kenji, Kawaguchi-shi, Saitama-ken (JP)
(74) Representative: Ben-Nathan, Laurence Albert

(57) **Abstract**

The operations of machining and cutting are facilitated, the working efficiency and the working accuracy are improved, and the effect of the machining action is increased, thus improving the durability of a blade. The apparatus comprises: a rotary shaft (5) secured thereto with a disc-shaped cutting or saw blade; a rotatable tubular body (7), in which the rotary shaft (5) is rotatably supported with its axis being eccentric with respect thereto; and a support member (9) for rotatably supporting the tubular body (7); the rotary shaft (5) and the turning tubular body (7) being rotatable, so that autorotation and revolution are given to the disc-shaped blade, and the disc-shaped blade is adapted to repeatedly contact with and separate from a workpiece.

## Description

### Field of the Invention

This invention relates to a method of machining and cutting a workpiece, and an apparatus therefor, wherein a disc-shaped cutting blade is rotated to perform on workpiece machining and cutting-off operations including grooving, flat finishing work, an operation of finishing side and end surfaces of a groove, an operation on the outer periphery of a cylinder (high efficiency rough work) and so forth.

### Description of the Prior Art

As a method of machining and cutting wood, stone, metal, a resin material, frozen foods or the like, it has been proposed to utilize a rotating disc-shaped blade.

Heretofore, the method of machining and cutting a workpiece of this type has been arranged such that, in general, a disc-shaped blade is mounted on a rotary shaft rotated by driving of a motor or the like and the turning (autorotating) disc-shaped blade is urged against a workpiece to perform machining and cutting operations.

In the above-described conventional method of machining and cutting the workpiece, when the workpieces include a material which is difficult to machine or new materials such as fine ceramics, a compound formed between metals, a composite material and the like, the operations of machining and cutting, including grooving, operations on the side and end surfaces of a groove and the like, are subjected to a very high working resistance, so that the working efficiency is low. The disc-shaped blade is distorted due to the high working resistance to thereby deteriorate the working efficiency. Particularly, it is difficult to perform a finishing operation on the end surface of a groove, and the blade becomes extremely worn out.

Furthermore, when the workpiece is made of a soft material, deformation of the material is high during the working operations, and chips tend to adhere to the blade, whereby the surface of worked area becomes rough, so that precision working is difficult to perform.

Furthermore, it is difficult to discharge the chips produced during machining and cutting, and the chips work as a resistance to impose a great burden on the blade, which also makes difficult the working operations on the workpiece.

### SUMMARY OF THE INVENTION

The present invention has been developed to obviate the above-described disadvantages and has as its object the provision of a machining method and apparatus having the purposes of reducing the resistance of the workpieces to machining and cutting, improving the working efficiency and working accuracy, and further, increasing the effect of the machining solution, thereby to improve the durability of the blade.

To achieve the above-described object, according to the present invention, autorotation and revolution are given to the disc-shaped blade, whereby the disc-shaped blade is adapted to repeat contact with and separation from the workpiece.

According to the present invention, the disc-shaped blade is revolved while being autorotated, whereby the disc-shaped blade repeats each contact with and each separation from the workpiece per revolution during the working operation.

The contact and separation by the blade is performed such that, while a cutting edge contacts the workpiece with shock impacts and instantaneously separates therefrom, the workpiece is worked on, whereby the blade separates from the workpiece before resistance is applied to the blade, so that resistance from the working operation can be decreased and discharge of the chips can be performed during the separation.

### BRIEF EXPLANATION OF THE DRAWINGS

The exact nature of this invention, as well as other objects and advantages thereof, will be readily apparent from consideration of the following description relating to the accompanying drawings, in which like reference characters designated the same or similar parts throughout the figures thereof and wherein:
Fig. 1 is an explanatory view illustrating one embodiment of the working state according to the present invention;
Fig. 2 is a partially enlarged explanatory view of Fig. 1;
Fig. 3 is a table showing the relationship between the width of deflection of autorotation from the center of the axis of revolution and the working resistance;
Fig. 4 is a table showing the relationship between the revolving speed of the axis of revolution and the working resistance;
Fig. 5 is a table showing the relationship between the revolving speed of the axis of revolution and the working accuracy;
Fig. 6 is a table showing the relationship between the revolving speed of the axis of revolution and the working efficiency;
Fig. 7 is a table showing the relationship between the revolving speed of the axis of revolution and, the wear of the grinding stone;
Fig. 8 is a longitudinal cross-sectional side view showing one embodiment of the present invention; and
Fig. 9 is a sectional end view taken along the line X-X in Fig. 8.

### DETAILED DESCRIPTION OF THE INVENTION

Detailed description will hereunder be given of a preferred embodiment of a method of machining and cutting a workpiece, and an apparatus therefor according to the present invention, with reference to the accompanying drawings.

In the method of machining and cutting a workpiece according to the present invention, autorotation and revolution are given to a disc-shaped blade, whereby the disc-shaped blade works on a workpiece while repeating contact with and separation from the workpiece.

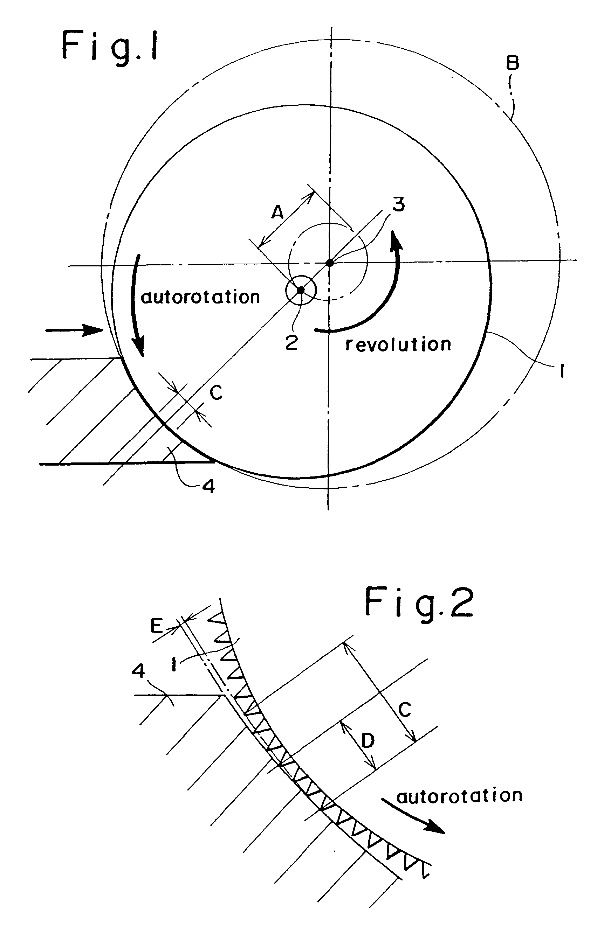

This working state will be described with reference to Fig. 1 and 2.

In Fig. 1, designated at reference numeral 1 is a disc-shaped blade, 2 an axis of autorotation of the blade 1 and 3 an axis of revolution of the blade 1. A length twice the distance between the axis of autorotation 2 and the axis of revolution 3 is a width of deflection A of the blade 1. Denoted at B is a passing track of the blade 1 by the revolution thereof.

As described above, the contact between the workpiece 4 and the blade 1 being revolved whilst being autorotated, is limited only to contact in a region C obtained by superposing a tangent line between the passing track B of the blade 1 by the revolution thereof and the outer periphery of the blade 1 on a one-revolution delivery value E, whereby the contact area is small.

Accordingly, a working force can be concentrated to produce an effective cutting edge portion D(working region) of the blade 1, so that the working resistance of the blade 1 as a whole can be reduced because the contact area is small.

The contact region C obtained by superposing the tangent line between the passing track B of the blade 1 by its revolution and the outer periphery of the blade 1 on the one-revolution delivery value E is determined by a working delivery speed and the width of deflection A, and is moved by the revolution.

As for the width of deflection A of the blade 1, it is preferable that the width is large, and the larger the width is, the smaller the working resistance applied to the blade 1 becomes and the smaller the deformation of the workpiece 4 by the working operation becomes.

Furthermore, as for the revolution, it is preferable that the revolving speed is high, and the higher the revolving speed is, the more the number of contacts by the revolution increases, the higher the delivery speed becomes and the greater the working efficiency is improved.

The one-revolution delivery value E fixes its aim of a removal value at a product between a removal value per effective cutting edge and the number of passages of the cutting edge during one revolution, and it is desirable that the one-revolution delivery value E is within 1/2 of the width of deflection A.

Accordingly, if the width of deflection A is made large and the speed of autorotation is made high, then the one-revolution delivery value E can be made high.

The working efficiency is proportional to a product between the one-revolution delivery value E and the speed of revolution.

On the other hand, if the one-revolution delivery value E is made small and the working efficiency is suppressed, then the effective cutting edge D(working region) becomes minute, and the working accuracy is improved and the working of rigid material is facilitated.

Therefore, the one-revolution delivery value E is not similar depending on the physical properties of the workpiece 4, and is determined by the physical properties of the workpiece 4.

The relationship between the physical properties of the workpiece 4 and the width of deflection A of the blade 1 by its revolution, i.e., the distance between the axis of revolution 3 and the axis of autorotation 2 of the blade, and the speed of revolution will hereunder be described with reference to the examples.

For example, in the case of a material such as aluminum, which is soft and viscous, the material itself tends to deform, whereby the resistance to the edge is comparatively small, so that the delivery value can be made large. However, since the chips tend to adhere to the cutting edge, the width of deflection A by its revolution is made large in accordance with the dimensions of the chips, whereby the discharge of chips is improved.

Furthermore, since the width of deflection A by the revolution is large, the one-revolution delivery value E can be made large, whereby, even if the speed of revolution is comparatively lowered, the efficiency is not lowered. Further, the speed of autorotation is made high so as to decrease the removal value per cutting edge, so that the working resistance is decreased, the deformation during the working can be made small and the speed of contact of the cutting edge is increased to thereby improve the cutting quality. That is, by making the speed of autorotation high, the working can be performed with small deformation and without the occurrence of burrs.

Furthermore, in the case of a rigid material such as ceramics, the worked-on surface is crushed by the blade 1 to thereby promote the working, so that deep cracks tend to occur under the worked-on surface. In the working on the material such as ceramics, the speed of revolution is increased to shorten the cycle of contact and separation and the speed of autorotation is increased to make the cutting edge contact shockingly. Further, the delivery value is decreased to make the cutting edge contact shallowly, whereby the edge is adapted to contact and separate shockingly and shallowly, so that no deep crack occurs. Thus, in the working on the material such as ceramics, the speeds of revolution and autorotation are made as large as possible, whereby the results of the both working efficiency and working state can become satisfactory.

In the case of the ordinary materials which are difficult to machine, such as high speed tool steels SKH 4 and HRC 64, the distance from contact to separation is determined in accordance with the shapes of chips, and the width of deflection A by the revolution fixes its aim at about two times the distance. This is because of that by decreasing the width of deflection A, the speed of revolution can be increased from the viewpoint of construction.

The speed of autorotation is determined in consideration of heating of the blade. The one-revolution delivery value E fixes its aim at 1/2 to 1/3 of the width of deflection A by the revolution, whereby a gap required for discharging the chips (distance of separation) is formed, so that the chips are discharged satisfactorily, thus preventing the clogging. These are required for increasing the speed of revolution as much as possible, and further, increasing the one-revolution delivery.

Therefore, since the working speed is determined by the product between the one-revolution delivery value and the speed of revolution, the one-revolution delivery value E is increased and the speed of revolution is raised, whereby the working efficiency can be improved. The speed of revolution is increased as much as possible, so that such satisfactory results can be achieved that the shocking contacts and separations at high speed are repeated to thereby decrease the working resistance, the heating is suppressed and the working accuracy is improved.

Tests performed to confirm the effects of the present invention and the results thereof will hereunder be described.

In the tests, as the axis of a grinding stone in a surface grinder, a shaft of a grinding stone having the axis of autorotation and the axis of revolution according to the present invention was adopted for the working.

Inverters are secured to a motor for autorotation and a motor for revolution, respectively, and rotatable control was performed.
The motor for autorotation: 1.5KW
The used grinding stone for cutting off: abrasive grain CBN, grain size 120#, diameter of grinding stone ø 200, thickness 1.5t, resin bond

### <Items of the tests>

1. The relationship between the working resistance and the width of deflection of autorotation from the center of the axis of revolution

### [The width of deflection of autorotation]

A. The axis of the grinding stone with the axis of autorotation being provided concentrically with the center of the axis of revolution
B. The axis of the grinding stone with the axis of autorotation being eccentric by 0.1mm from the center of the axis of revolution
C. The axis of the grinding stone with the axis of autorotation being eccentric by 0.2mm from the center of the axis of revolution
D. The axis of the grinding stone with the axis of autorotation being eccentric by 0.3mm from the center of the axis of revolution

### [The conditions]

The circumferential speed of the grinding stone: 1758m(2800rpm)
Revolution of the axis of revolution: 6000rpm
The table delivery speed: 100mm/min

### [The materials to be worked on]

High speed tool steels SKH 4. HRC 64: 20x20x150

### [The method of the tests]

The working resistance was obtained by measuring the changes in current value of a motor for rotating the axis of autorotation.
* The results of the tests

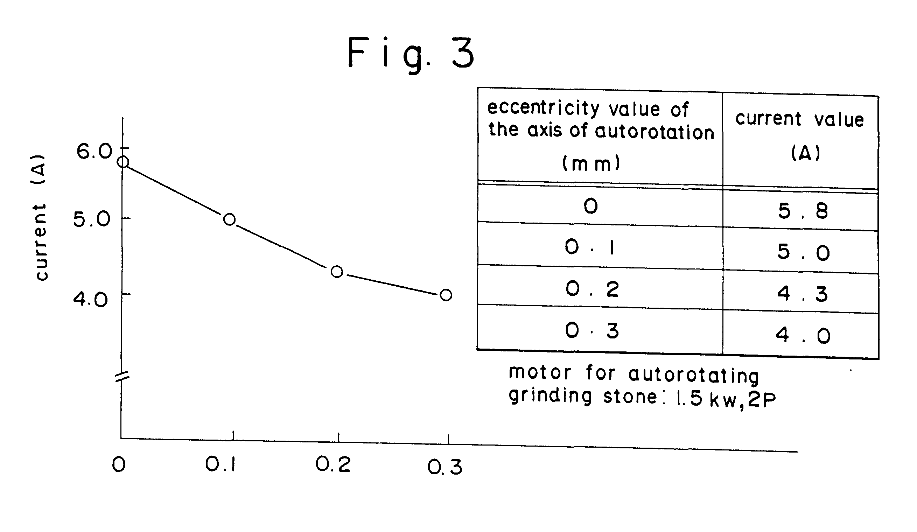

The measured values are as shown in a table shown in Fig.3.

According to this table, the larger the width of deflection is, the smaller the current value is. By this, it is confirmed that the larger the width of deflection of autorotation is, the smaller the working resistance is.

2. The relationship between the working resistance and the revolving speed of the axis of revolution

### [The revolving speed of the axis of revolution]

| | | | |
|---|---|---|---|
| A. | The revolving speed | 0rpm | 0Hz |
| B. | The revolving speed | 1200rpm | 20Hz |
| C. | The revolving speed | 2400rpm | 40Hz |
| D. | The revolving speed | 3600rpm | 60Hz |
| E. | The revolving speed | 4800rpm | 80Hz |
| F. | The revolving speed | 6000rpm | 100Hz |
| G. | The revolving speed | 7200rpm | 120Hz |
| H. | The revolving speed | 8400rpm | 140Hz |
| I. | The revolving speed | 9600rpm | 160Hz |

### [The conditions]

The width of deflection of revolution: 0.4mm
(The axis of autorotation was made eccentric by 0.2mm from the center of the axis of revolution.)
The circumferential speed of the grinding stone: 1758m(2800rpm)
The table delivery speed: 100mm/min
The cut-in value: 15mm

### [The materials to be worked on]

High speed tool steels SKH 4, HRC 64: 20x20x150

### [The method of tests]

The working resistance was obtained by measuring the changes in current value of a motor for rotating the axis of autorotation.
* The results of the tests

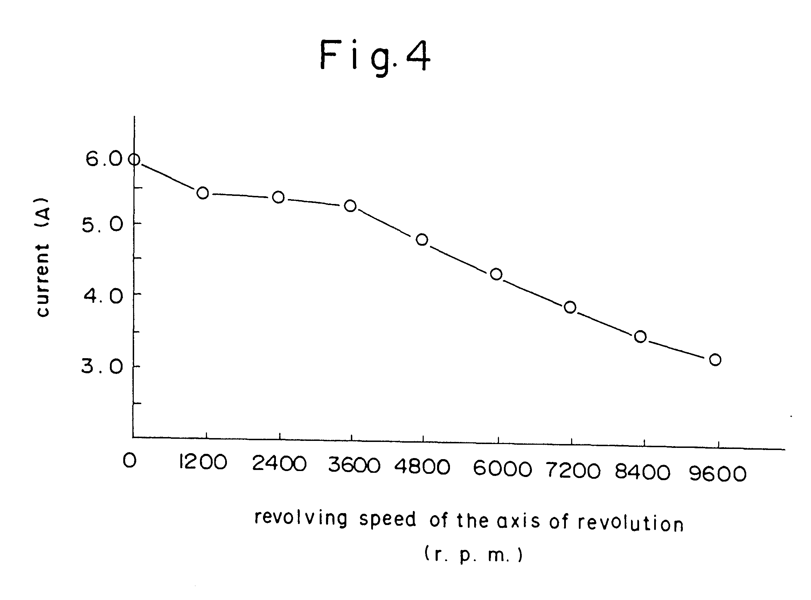

The measured values are as shown in a table shown in Fig. 4.

According to this table, the higher the revolving speed of the axis of revolution is, the smaller the current value is. By this, it is confirmed that the higher the revolving speed of the axis of revolution is, the smaller the working resistance is.

3. The relationship between the working accuracy and the revolving speed of the axis of revolution

### [The revolving speed of the axis of revolution]

| | | | |
|---|---|---|---|
| A. | The revolving speed | 0rpm | 0Hz |
| B. | The revolving speed | 1200rpm | 20Hz |
| C. | The revolving speed | 2400rpm | 40Hz |
| D. | The revolving speed | 3600rpm | 60Hz |
| E. | The revolving speed | 4800rpm | 80Hz |
| F. | The revolving speed | 6000rpm | 100Hz |
| G. | The revolving speed | 7200rpm | 120Hz |
| H. | The revolving speed | 8400rpm | 140Hz |
| I. | The revolving speed | 9600rpm | 160Hz |

### [The conditions]

The width of deflection of revolution: 0.4mm
(The axis of autorotation was made eccentric by 0.2mm from the center of the axis of revolution.)
The circumferential speed of the grinding stone: 1758m(2800rpm)
The table delivery speed: 100mm/min
The cut-in value: 12mm

### [The materials to be worked on]

High speed tool steels SKH 4. HRC 64: 20x20x150

### [The method of the tests]

The working accuracy was obtained by measuring the width of the worked groove at the respective revolving speeds of the axis of grinding stone and the work.
* The results of the tests

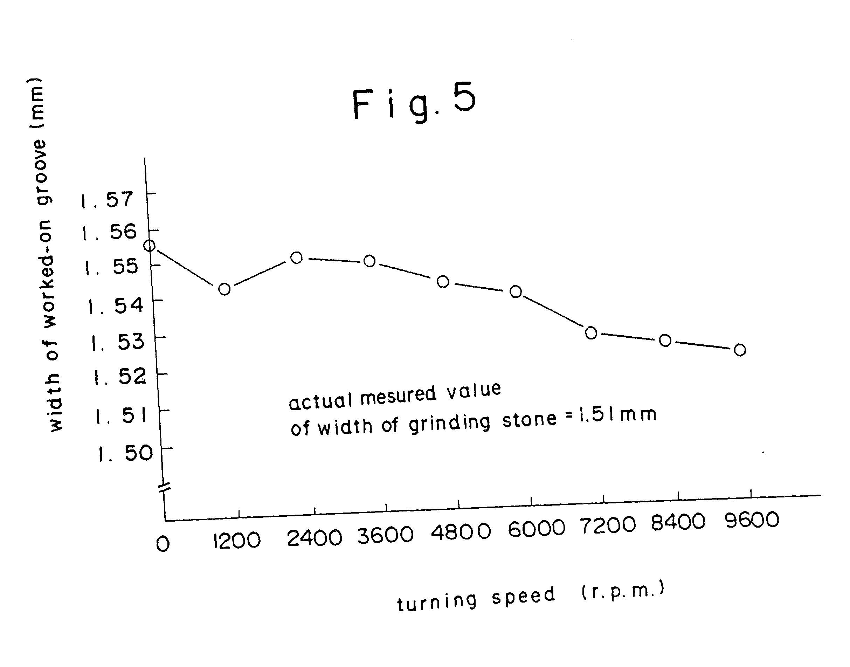

The measured values are as shown in a table shown in Fig. 5.

According to this table, the higher the revolving speed of the axis of revolution is, the more the width of the worked groove approaches to the actually measured value. By this, it is confirmed that the higher the revolving speed of the axis of revolution is, the more the working accuracy is improved.

4. The relationship between the working efficiency and the revolving speed of the axis of revolution

### [The revolving speed of the axis of revolution]

| | | | |
|---|---|---|---|
| A. | The revolving speed | 0rpm | 0Hz |
| B. | The revolving speed | 1200rpm | 20Hz |
| C. | The revolving speed | 2400rpm | 40Hz |
| D. | The revolving speed | 3600rpm | 60Hz |
| E. | The revolving speed | 4800rpm | 80Hz |
| F. | The revolving speed | 6000rpm | 100Hz |
| G. | The revolving speed | 7200rpm | 120Hz |
| H. | The revolving speed | 8400rpm | 140Hz |
| I. | The revolving speed | 9600rpm | 160Hz |

### [The conditions]

The table delivery speed: A knob for adjusting the table delivery speed was adjusted in speed such that the current of the motor of the axis of the grinding stone(working resistance) became 4.0A.
The width of deflection of the axis of revolution: 0.4mm
(The axis of autorotation was made eccentric by 0.2mm from the center of the axis of revolution.)
The circumferential speed of the grinding stone: 1758m (2800rpm)
The cut-in value: 12mm

### [The materials to be worked on]

High speed tool steels SKH 4, HRC 64: 20x20x150

### [The method of the tests]

The working efficiency was obtained by measuring the relationship of the revolving speed with the table delivery speed with the working resistance(current) being kept constant.
* The results of the tests

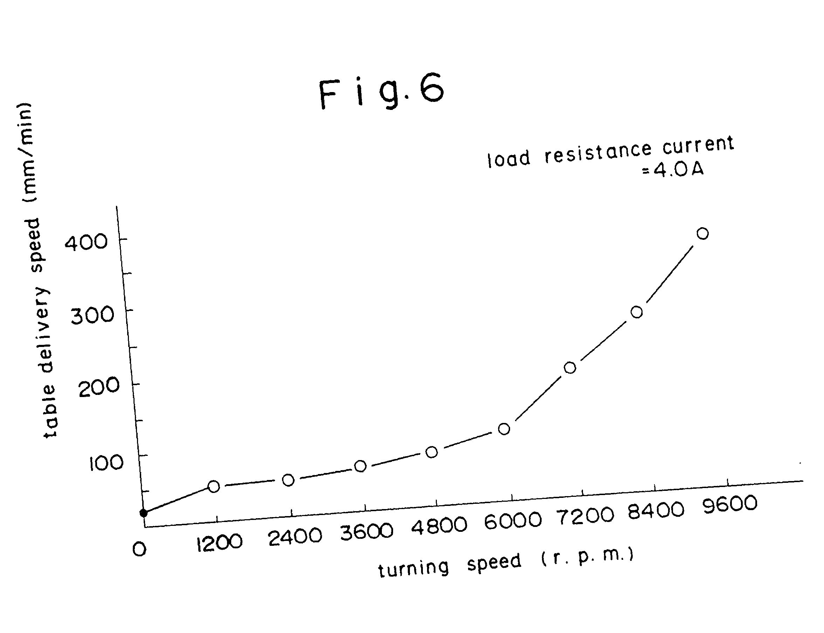

The measured values are as shown in a table in Fig. 6.

Accordingly to this table, the higher the revolving speed of the axis of revolution is, the higher the table delivery speed becomes. By this, it is confirmed that the higher the revolving speed of the axis of revolution is, the more the working efficiency is improved.

5. The relationship between the revolving speed of the axis of revolution and the wear of the grinding stone

### [The revolving speed of the axis of revolution]

| | | | |
|---|---|---|---|
| A. | The revolving speed | 0rpm | 0Hz |
| B. | The revolving speed | 1200rpm | 20Hz |
| C. | The revolving speed | 2400rpm | 40Hz |
| D. | The revolving speed | 3600rpm | 60Hz |
| E. | The revolving speed | 4800rpm | 80Hz |
| F. | The revolving speed | 6000rpm | 100Hz |
| G. | The revolving speed | 7200rpm | 120Hz |
| H. | The revolving speed | 8400rpm | 140Hz |
| I. | The revolving speed | 9600rpm | 160Hz |

### [The conditions]

The width of deflection of revolution: 0.4mm
(The axis of autorotation was made eccentric by 0.2mm from the center of the axis of revolution.)
The circumferential speed of the grinding stone: 1758m(2800rpm)
The table delivery speed: 100mm/min
The cut-in value: 15mm
The machining solution: Noritake Cool No.5 Emulsion type, JIS
Machining Oil K2241W1, two types

### [The materials to be worked on]

High speed tool steels SKH 4, HRC 64: 20x20x150

### [The method of tests]

Fifty high speed tool steels SKH 4 were subjected to works of forming grooves each having dimensions of a cut-in value of 15mm and a length of 150L under respective conditions of revolution, and the diameters of the grinding stone before and after the working were measured by a micrometer to thereby calculate a ratio of grinding.
* The results of the tests

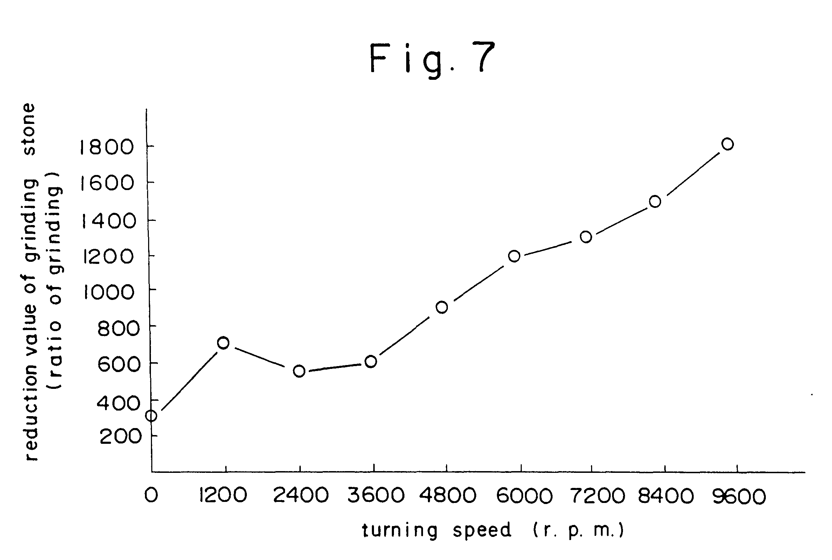

The measured values are as shown in a table shown in Fig. 7.

According to this table, the higher the revolving speed of the axis of revolution is, the smaller the abrasion wear of the grinding stone is. By this, it is confirmed that the higher the revolving speed of the axis of revolution is, the durability of the grinding stone is improved.

From the above-described results of the tests, it was found, when the autorotation and the revolution were brought into synchronism, the edge of the blade contacted in one point, so that the results of the tests on the working were unsatisfactory. Accordingly, this region should be evaded and the speed of revolution should be higher than the speed of autorotation, and it is preferable that the speed of revolution is more than 1.5 times the speed of autorotation.

Description will hereunder be given of an apparatus for machining and cutting off to perform the above-described method of machining and cutting off.

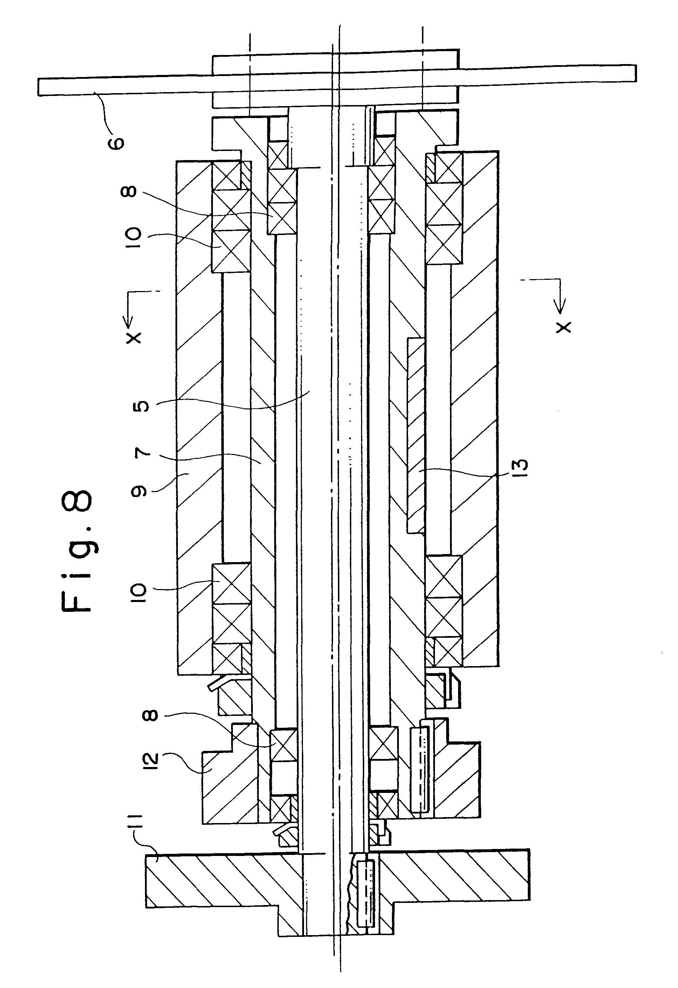

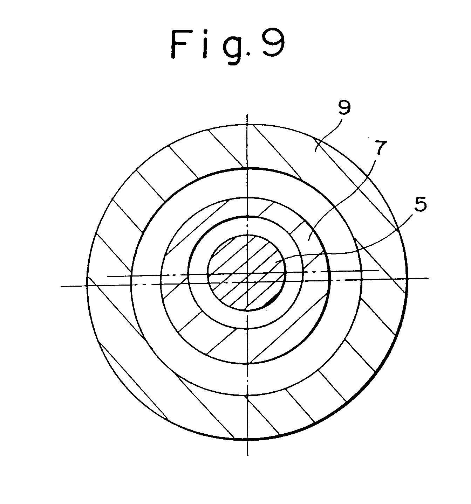

Fig. 8 and 9 show one embodiment of the apparatus for machining and cutting off according to the present invention. In the drawings, designated at 5 is a rotary shaft, and a disc-shaped blade 6 is detachably mounted on the forward end thereof.

Denoted at 7 is a turning tubular body, in which the rotary shaft 5 is rotatably supported with the axis thereof being eccentric, and 8 a bearing.

Designated at 9 is a support member for rotatably supporting the above-described turning tubular body 7, formed to provide a tubular shape and rotatably supporting the above-described turning tubular body 7 therein. This support member 9 is secured to a substrate, not shown. Denoted at 10 is a bearing.

The rear end portion of the rotary shaft 5 secured thereto with the disc-shaped blade 6 is projected from the rear end of the turning tubular body 7, and a pulley 11 for receiving the transmission of rotation from a motor, not shown, is provided at this rear end portion.

Furthermore, the rear end portion of the above-described turning tubular body 7 is projected from the rear end of the support member 9, and a pulley 12 for receiving the transmission of rotation from a motor, not shown, is provided at this rear end portion.

Denoted at 13 is a balancer secured to the turning tubular body 7. This balancer 13 corrects unbalance due to the eccentricity of the rotary shaft 5 supported in the turning tubular body 7, so that the turning tubular body 7 can be rotated smoothly.

Then, when the rotary shaft 5 and the turning tubular body 7 are rotated, due to the rotation of the turning tubular body 7, the rotary shaft 5 is autorotated while being revolved by use of a value of eccentricity between the both members in the turning tubular body 7 as a radius, whereby the disc-shaped blade 6 secured to this rotary shaft 5 receives the autorotation and revolution of the rotary shaft 5 to thereby be autorotated while being revolved.

The present invention has the above-described construction, and the present invention is applied to a cutting-off apparatus by use of the disc-shaped blade, a milling machine using the disc-shaped blade as a milling cutter and a grinding machine using the disc-shaped blade as a rotary grinding stone. However, the present invention should not necessarily be limited to these, and is applied to all of methods and apparatus, wherein the disc-shaped blade is rotated to machine and cut off a workpiece.

As has been described hereinabove, according to the present invention, since the autorotation and revolution are given to the disc-shaped blade and the disc-shaped blade is adapted to repeat contact to and separation from the workpiece, the disc-shaped blade is revolved while being autorotated, whereby the contact between the blade and the workpiece is limited to only the contact of the region obtained by superposing the tangent line between the passing track of the blade by the revolution and the outer periphery of the blade on the one-revolution delivery value, whereby the contact area is reduced and the working force can be concentrated to the effective cutting edge of the blade, so that the working resistance of the blade as a whole is decreased. With this arrangement, the working efficiency can be improved, the deformation due to the working can be reduced and the occurrence of burrs can be suppressed, so that the working accuracy can be improved.

Furthermore, due to the decreased working resistance, the distortion of the grinding stone is reduced and the work does not run off the working surface, so that the width of the grinding stone can be decreased.

Furthermore, the chips can be discharged during the separation, so that the discharge of chips is satisfactory and the blade can be prevented from being clogged.

Furthermore, due to the contact and separation of the blade, the machining solution or grinding solution can effectively enter between the work and blade, so that the effects of the machining solution or grinding solution can be increased and the durability of the blade can be improved.

It should be understood, however, that there is no intention to limit the invention to the specific forms disclosed, but on the contrary, the invention is to cover all modifications, alternate constructions and equivalents falling within the scope of the invention as defined in the appended claims.

## Claims

1. A method for machining and cutting a workpiece, wherein autorotation and revolution are given to a disc-shaped blade such that the autorotating disc-shaped blade is adapted to repeatedly contact with and separate from a workpiece.

2. An apparatus for machining and cutting a workpiece, comprising: a rotary shaft (5) having secured thereto a disc-shaped blade (6); a rotatable tubular body (7), in which said rotary shaft (5) is rotatably supported with the axis of rotation thereof being eccentric with respect to that of the tubular body; and a support member (9) for rotatably supporting said rotatable tubular body (7); wherein said rotary shaft (5) and said tubular body (7) are rotatable so that autorotation and revolution are given to said disc-shaped blade (5).
